**Europäisches Patentamt**

**European Patent Office**

**Office européen des brevets**

(19)

(11) Veröffentlichungsnummer: **0 108 243**
**B1**

(12) ## EUROPÄISCHE PATENTSCHRIFT

(45) Veröffentlichungstag der Patentschrift:
**01.06.88**

(51) Int. Cl.⁴: **H 04 N 3/20**

(21) Anmeldenummer: **83109796.9**

(22) Anmeldetag: **30.09.83**

(54) Schutzschaltung für die Bildröhre eines Fernsehempfängers.

(30) Priorität: **04.11.82 DE 3240708**

(43) Veröffentlichungstag der Anmeldung:
**16.05.84 Patentblatt 84/20**

(45) Bekanntmachung des Hinweises auf die Patenterteilung:
**01.06.88 Patentblatt 88/22**

(84) Benannte Vertragsstaaten:
**FR GB IT SE**

(56) Entgegenhaltungen:
**DE - B - 1 487 008**
**US - A - 4 042 858**
**US - A - 4 074 323**

(73) Patentinhaber: **Blaupunkt-Werke GmbH,
Robert-Bosch-Strasse 200, D-3200 Hildesheim (DE)**

(72) Erfinder: **Schuchardt, Günter, Ing. grad., Himmelsthürer
Strasse 3, D-3200 Hildesheim (DE)**
Erfinder: **Black, Karl-Heinz, Ing. grad.,
Kunibertstrasse 4 A, D-3200 Hildesheim (DE)**

(74) Vertreter: **Eilers, Norbert, Dipl.-Phys., Blaupunkt-Werke
GmbH Robert-Bosch-Strasse 200, D-3200 Hildesheim
(DE)**

## Beschreibung

Stand der Technik

Die Erfindung geht aus von einer Schutzschaltung nach der Gattung des Hauptanspruchs. Bei einem Defekt der Videoendstufen kann der höchstzulässige Strahlstrom der Bildröhre überschritten und dadurch die Bildröhre beschädigt werden. Bei einer bekannten Schutzschaltung – «Blautpunkt-Chassis-Typ FM 120» – wird der Strahlstrom durch Anlegen einer negativen Spannung an das Steuergitter gesperrt und die Horizontalablenkung abgeschaltet, worauf dann als Folge des Nichtvorhandenseins von Horizontalablenkimpulsen die Heizung, die Schirmgitterspannung und die Hochspannung ebenfalls abgeschaltet werden.

Bei den bekannten Schaltungen wird mit Hilfe einer Schwellschaltung der Spannungsabfall an einem im Stromkreis des Strahlstroms liegenden Widerstand gemessen und zur Abschaltung des Horizontaloszillators verwendet. Mit dem Ausbleiben der Horizontalimpulse wird dann ein Schalttransistor in den leitenden Zustand geschaltet, wodurch über ein R/C-Glied und eine Diode das Steuergitter der Bildröhre vorübergehend eine stark negative Spannung erhält. Solange der Strahlstrom somit durch diese negative Steuergitterspannung gesperrt ist, kühlt die Kathode genügend ab und die Hochspannung fällt auf einen unschädlichen Wert.

Die bekannte Schaltung bedeutet einen nicht unerheblichen Aufwand. So werden beispielsweise bei einer Ausführung der bekannten Schaltung ein Transistor, ein Elektrolytkondensator für 250 V und fünf weitere Bauelemente benötigt. Aufgabe der vorliegenden Erfindung ist es, eine Schutzschaltung für die Bildröhre eines Fernsehempfängers vorzuschlagen, welche sich durch geringen Aufwand auszeichnet.

Vorteile der Erfindung

Die erfindungsgemässe Schutzschaltung mit den kennzeichnenden Merkmalen des Hauptanspruchs hat dem gegenüber den Vorteil, dass zur Sperrung des Strahlstroms lediglich ein Thyristor und ein Widerstand benötigt werden. Als weiterer Vorteil ist anzusehen, dass die Zuverlässigkeit eines Thyristors grösser als die eines Transistors ist.

Durch die in den Unteransprüchen aufgeführten Massnahmen sind vorteilhafte Weiterbildungen und Verbesserungen der im Hauptanspruch angegebenen Schutzschaltung möglich.

Zeichnung

Ein Ausführungsbeispiel der Erfindung ist in der Zeichnung anhand mehreren Figuren dargestellt und in der nachfolgenden Beschreibung näher erläutert.

Fig. 1 zeigt eine bekannte Schutzschaltung,

Fig. 2 zeigt ein erfindungsgemässes Ausführungsbeispiel und

Fig. 3 zeigt ein Schaltungsdetail, welches sowohl bei der bekannten Schaltung als auch bei der erfindungsgemässen Schutzschaltung angewendet werden kann.

Beschreibung des Ausführungsbeispiels

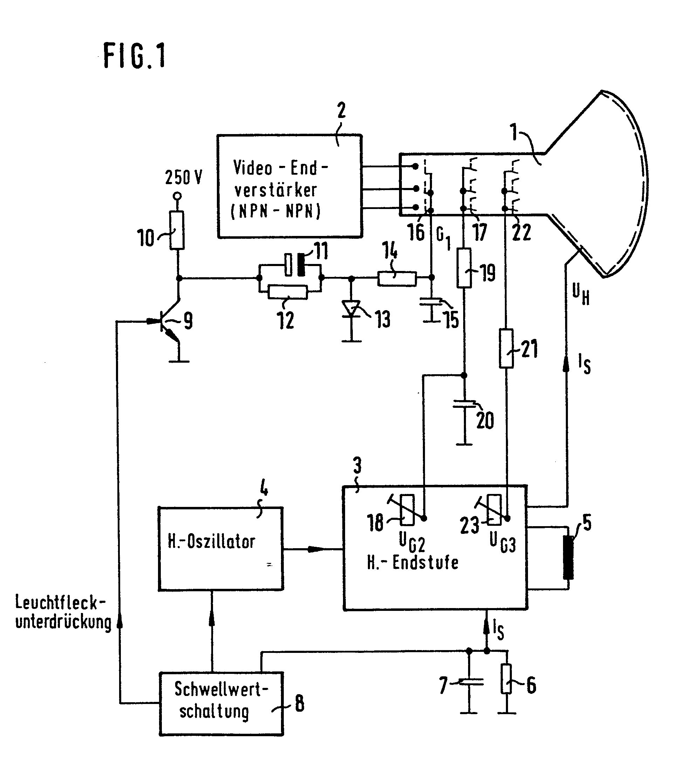

Die in Fig. 1 dargestellte bekannte Schaltung umfasst die Bildröhre 1, den Videoendverstärker 2, die Horizontalendstufe 3 und den Horizontaloszillator 4. Diese Komponenten eines Fernsehempfängers entsprechen den herkömmlichen und brauchen im Zusammenhang mit dieser Erfindung nicht genauer beschrieben zu werden. Ferner sind mit 5 noch die Horizontalablenkspulen angedeutet. Die Horizontalendstufe 3 umfasst ebenfalls die Erzeugung der Hochspannung $U_H$. Zur Messung des Strahlstromes $I_S$ ist ein Widerstand 6 vorgesehen, an dessen von Masse abgewandtem Ende eine Spannung ansteht, welche proportional zum Strahlstrom ist. Der Widerstand 6 ist von einem Kondensator 7 überbrückt, damit eine kurzzeitige Überschreitung des maximalen Strahlstromes – also sehr kleine helle Flächen auf dem Bildschirm – nicht berücksichtigt werden.

Die somit erzeugte Spannung wird einer Schwellwertschaltung 8 zugeführt, welche den Horizontaloszillator 4 abschaltet, wenn der Strahlstrom einen zulässigen Wert überschreitet. Gleichzeitig wird von der Schwellwertschaltung 8 an die Basis des Transistors 9 ein positiver Spannungsstrom abgegeben, welcher eine vorübergehende Sperrung des Steuergitters der Bildröhre 1 verursacht. Wenn der Strahlstrom $I_S$ nämlich den zulässigen Wert überschreitet, wird der Transistor 9 in den leitenden Zustand geschaltet. Damit wird sein Kollektor, welcher vor dem Spannungssprung über den Widerstand 10 an positives Potential von beispielsweise 250 V gelegt war, auf 0 Volt geschaltet. Vor dem Spannungssprung war der Kondensator 11 über den Widerstand 10 und die Diode 13 auf positives Potential aufgeladen. Durch den Spannungssprung wird nun der mit der Diode 13 verbundene Belag des Kondensators 11 auf eine Spannung von −250 V gebracht. Diese wird über das Siebglied 14 und 15 dem Steuergitter 16 der Bildröhre 1 zugeführt.

Über den Widerstand 12 erfolgt eine langsame Entladung des Kondensators 11, so dass das Steuergitter für ca. 30 Sekunden gesperrt bleibt. Nach dieser Zeit ist die Hochspannung bereits abgesunken und die Kathode genügend abgekühlt, so dass eine weitere Sperrung des Strahlstroms durch das Gitter 16 nicht mehr erforderlich ist.

Das zweite Gitter 17 erhält über ein Potentiometer 18 aus der Horizontalendstufe 3 eine Spannung zur Einstellung des Arbeitspunktes der Röhre. In der Zuführung dieser Spannung ist eine R/C-Kombination 19/20 vorgesehen, um die Horizontalendstufe vor Beschädigungen durch Überschläge der Bildröhre 1 zu schützen. Ebenfalls über einen Schutzwiderstand 21 ist das Gitter 22 der Bildröhre 1 mit einem Potentiometer 23 inmnerhalb der Horizontalendstufe verbunden, welches zur Einstellung der Schärfe der Bildröhre 1 vorgesehen ist.

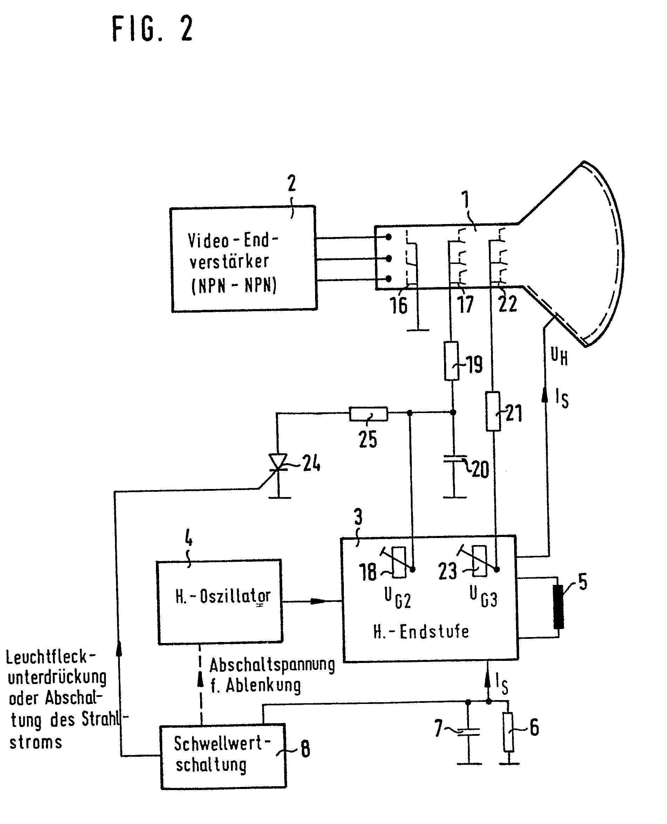

In Fig. 2 sind Elemente, welche auch in der Anordnung nach Fig. 1 vorhanden sind, mit gleichen Bezugszeichen versehen. Im folgenden werden lediglich die Abweichungen erläutert. Die bei Übersteigen des Strahlstroms der höchstzulässigen Grenze von der Schwellwertschaltung 8 abgegebenen Spannung wird jedoch der Steuerelektrode eines Thyristors 24 zugeleitet. Der Thyristor 24 wird somit leitend und schliesst die Schirmgitterspannung gegen Masse kurz. Zur Begrenzung des Stromes ist ein Widerstand 25 vorgesehen, dessen Wert jedoch wesentlich kleiner als der Innenwiderstand der Schirmgitterspannungsquelle ist. Der Kathodenstrom der Bildröhre 1 wird beim Abschalten der Schirmgitterspannung so klein, dass auf ein Abschalten der Horizontalablenkung ggf. auch verzichtet werden kann.

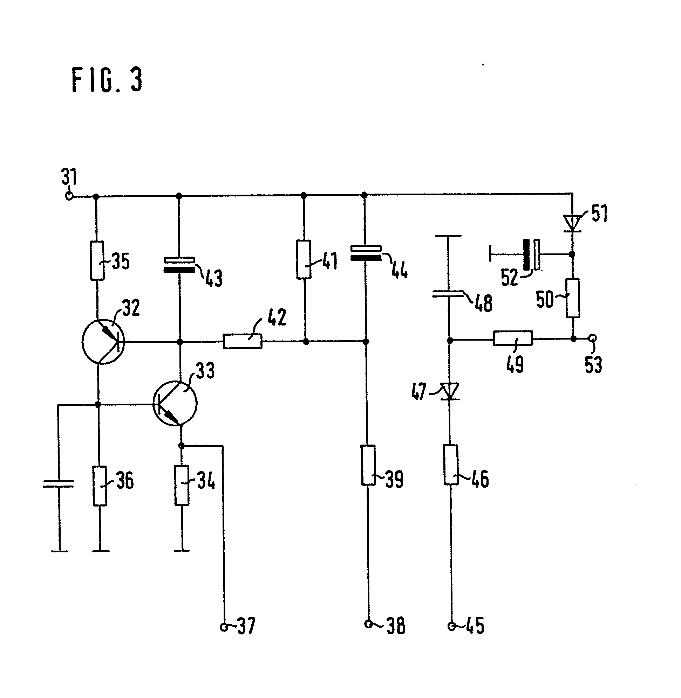

Fig. 3 zeigt nun die Schwellwertschaltung 8 in detaillierterer Darstellung. Bei 31 wird der Schaltung nach Fig. 1 eine positive Betriebsspannung von beispielsweise 12 V zugeführt. Die Transistoren 32 und 33 sowie die Widerstände 34, 35 und 36 sind derart miteinander verbunden, dass ein bistabiles Element entsteht. Befinden sich die Transistoren 32 und 33 im leitenden Zustand, so entsteht am Widerstand 34 ein der halben Betriebsspannung entsprechender Spannungsabfall. Diese Spannung wird über den Ausgang 37 dem Horizontaloszillator 4 (Fig. 1 und 2) zugeführt und sperrt diesen.

Dem Eingang 38 wird eine dem Strahlstrom proportionale negative Spannung zugeführt, welche über den aus den Widerständen 39 und 41 bestehenden Spannungsteiler sowie über den Widerstand 42 zur Basis des Transistors 32 gelangt. Die Kondensatoren 43 und 44 glätten die bei 38 zugeführte Spannung, um – wie bereits oben erwähnt – eine Unabhängigkeit vom Bildinhalt zu erzielen. Nach dem Einschalten befinden sich die Transistoren 32 und 33 im nichtleitenden Zustand, solange kein den höchstzulässigen Wert überschreitender Strahlstrom auftritt. Tritt letzteres jedoch ein, so wird zunächst der Transistor 32 leitend, welcher wiederum den Transistor 33 in den leitenden Zustand steuert. Dieses hat zur Folge, dass dann beide Transistoren unabhängig von der bei 38 zugeführten Spannung so lange im leitenden Zustand verbleiben, bis das Gerät abgeschaltet und erneut wieder eingeschaltet wird.

Die Schaltung nach Fig. 3 ist mit einem weiteren Eingang 45 versehen, welchem von der Horizontalendstufe zeilenfrequente Impulse negativer Polarität zugeführt werden. Diese gelangen über einen Widerstand 46 und eine Diode 47 an einen Kondensator 48. Dieser wird somit negativ geladen. Die Spannung am Kondensator 48 wird einem aus den Widerständen 49 und 50 bestehenden Spannungsteiler zugeführt. Das andere Ende des Spannungsteilers liegt an der bei Klemme 31 zugeführten positiven Betriebsspannung. Eine Diode 51 und ein Kondensator 52 sind dafür vorgesehen, dass auch nach Abschalten des Geräts eine gewisse Zeit lang eine positive Spannung am Widerstand 50 anliegt. Der Verbindungspunkt der Widerstände 49 und 50 bildet den Ausgang 53 der Anordnung nach Fig. 3, welche mit der Basis des Transistors 9 (Fig. 1) oder mit der Steuerelektrode des Thyristors 24 (Fig. 2) verbunden ist.

Solange von der Horizontalendstufe horizontalfrequente Impulse über den Eingang 45 der Anordnung nach Fig. 3 zugeführt werden, überwiegt die negative Spannung am Kondensator 48 gegenüber der positiven Betriebsspannung. Der Ausgang 53 führt dann also eine negative Spannung, welche den Transistor 9 bzw. den Thyristor 24 im nichtleitenden Zustand hält. Fällt nun die Horizontalablenkung aus oder wird sie wegen zu hohem Strahlstrom abgeschaltet, so bildet sich am Ausgang 53 eine positive Spannung, welche den Transistor 9 bzw. den Thyristor 24 in den leitenden Zustand schaltet. Da der dann durch den Thyristor fliessende Strom äusserst gering ist (nachdem der Kondensator 20 entladen wurde) ist es zur weiteren Sperrung des Strahlstroms erforderlich, dem Thyristor auch nach dem Ansprechen der Schwellwertschaltung eine positive Spannung zuzuführen. Dieses ist im Falle einer Überschreitung des Strahlstroms durch die bistabilen Eigenschaften der aus den Transistoren 32 und 33 (Fig. 3) bestehenden Schaltung und im Falle des Abschaltens des Gerätes durch die Diode 51 und den Kondensator 52 gewährleistet.

**Patentansprüche**

1. Schutzschaltung für die Bildröhre (1) eines Fernsehempfängers, dadurch gekennzeichnet, dass ein Thyristor (24) mit der Kathode auf festem Potential liegt und mit seiner Anode über einen Widerstand (25) mit der Schirmgitterspannungszuführung der Bildröhre (1) verbunden ist und dass die Steuerelektrode des Thyristors (24) mit dem Ausgang einer Schwellwertschaltung (8) verbunden ist, deren Eingang eine vom Strahlstrom abhängige Spannung zugeführt ist.

2. Schutzschaltungen nach Anspruch 1, dadurch gekennzeichnet, dass der Eingang (38) der Schwellwertschaltung (8) über den Ausgang (37) einer bistabilen Stufe (32 bis 36) mit einem Steuereingang des Horizontaloszillators (4) verbunden ist und der Ausgang der dem Horizontaloszillator (4) nachgeschalteten Horizontalendstufe (3) über ein einem weiteren Eingang (45) der Schwellwertschaltung (8) nachgeschaltetes RC-Glied (46 bis 48), das einen Gleichrichter (47) umfasst, und einen Spannungsteiler (49, 50) mit der Steuerelektrode des Thyristors (24) verbunden ist, wobei das andere Ende des Spannungsteilers über eine Diode (51) mit positivem Bezugspotential (31) und über einen Kondensator (52) mit Massepontential verbunden ist.

**Claims**

1. Protective circuit for the image tube (1) of a television receiver, characterized in that the cathode of a thyristor (24) is at a fixed potential and the anode of the thyristor is connected via a resistor (25) to the screen grid voltage supply of the image tube (1), and in that the control electrode of the thyristor (24) is connected to the output of a threshold value circuit (8), to the input of which a voltage dependent upon the beam current is supplied.

2. Protective circuits according to claim 1, characterized in that the input (38) of the threshold value circuit (8) is connected via the output (37) of a bistable stage (32 to 36) to a control input of the horizontal oscillator (4) and the output of the horizontal output stage (3) connected downstream of the horizontal oscillator (4) is connected via an RC element (46 to 48), which is connected downstream of a further input (45) of the threshold value circuit (8) and which comprises a rectifier (47), and a voltage divider (49, 50) to the control electrode of the thyristor (24), the other end of the voltage divider being connected via a diode (51) to a positive reference potential (31) and via a capacitor (52) to earth potential.

**Revendications**

1. Circuit de protection du tube cathodique (1) d'un récepteur de télévision, caractérisé par un thyristor (24) dont la cathode est à un potentiel fixe et dont l'anode est reliée par une résistance (25) à l'alimentation en tension de la grille de l'écran du tube cathodique (1), l'électrode de commande du thyristor (24) étant reliée à la sortie d'un circuit à seuil (8) dont l'entrée reçoit une tension dépendant de l'intensité du courant du faisceau.

2. Circuit de protection selon la revendication 1, caractérisé en ce que l'entrée (38) du circuit à seuil (8) est reliée par l'intermédiaire de la sortie (37) d'un étage bistable (32–36) à une entrée de commande de l'oscillateur horizontal (4) et la sortie de l'étage de sortie horizontal (3) en aval de l'oscillateur horizontal (4) est reliée par un montage RC (46–48) sur une autre entrée (45) du circuit à seuil (8), ce montage RC comportant un redresseur (47) et par un diviseur de tension (49, 50) à l'électrode de commande du thyristor (24), l'autre extrémité du diviseur de tension étant reliée par une diode (51) au potentiel de référence (31) positif et par un condensateur (52) au potentiel de masse.

# FIG.1

**Video-End-verstärker (NPN-NPN)** (2)

250 V — 10

11, 12, 14, 13, 15

9

16, $G_1$, 17, 22

19, 21

$U_H$

$I_S$

20

H.-Oszillator (4) — 3

18 $U_{G2}$ — 23 $U_{G3}$

H.-Endstufe

5

Leuchtfleck-unterdrückung

Schwellwert-schaltung (8)

7, 6

$I_S$

# FIG. 2

Video-End-
verstärker
(NPN - NPN)

H.-Oszillator

H.-Endstufe

Schwellwertschaltung

Leuchtfleck-
unterdrückung
oder Abschaltung des Strahlstroms

Abschaltspannung
f. Ablenkung

$U_H$

$I_S$

$U_{G2}$

$U_{G3}$

# FIG. 3